# EUROPEAN PATENT SPECIFICATION

(11) **EP 2 998 200 B1**
(45) Date of publication and mention of the grant of the patent: **21.11.2018**
(21) Application number: 13884769.4
(22) Date of filing: 15.05.2013
(51) Int. Cl.: B62D 6/00, B62D 5/04

(54) **ELECTRIC POWER STEERING DEVICE**
ELEKTRISCHE SERVOLENKVORRICHTUNG
DISPOSITIF DE DIRECTION ÉLECTRIQUE

(43) Date of publication of application: 23.03.2016
(73) Proprietor: Mitsubishi Electric Corporation, Tokyo 100-8310 (JP)
(72) Inventor: IOHARA Satoshi, Tokyo 100-8310 (JP)
(74) Representative: Hoffmann Eitle
(86) International application number: PCT/JP2013/063492
(87) International publication number: WO 2014/184888

(56) References cited:
- JP-A- 2007 295 658
- JP-A- 2010 047 096
- JP-A- 2012 188 101
- US-A1- 2011 205 672
- US-A1- 2012 212 159

## Description

### BACKGROUND OF THE INVENTION

### Technical Field

The present invention relates to an electric power steering device which assists a steering power of a handle by an electric motor.

### Background Art

As known in a conventional art, an electric power steering device is configured in such a way that a steering torque, which is supplied to a handle by a driver, is detected, and a torque corresponding to the detected steering torque is generated by an electric motor so as to assists a steering power of the driver.

In conventional electric power steering devices, there is an electric power steering device in which a mechanical power source relay is disposed at a feeding passage between a power source, such as a vehicular battery, and an electric motor, and a feeding circuit for the electric motor is opened or closed by controlling the power source relay. Moreover, there is an electric power steering device in which the mechanical power source relay is composed of a switching element such as a MOSFET (Metal Oxide Semiconductor Field Effect Transistor). Furthermore, in order to prevent a device from being destroyed when a battery, which is mounted in a vehicle, is abnormally connected in a reverse polarity, there is an electric power steering device in which a power source relay is configured in such a way that identical MOSFETs are connected in series, and the power source relay is disposed at a feeding passage of an electric motor.

As described above, in a conventional electric power steering device in which the identical MOSFETs are connected in series so as to be disposed at the feeding passage of the electric motor, in order to detect an abnormality of each of the MOSFETs, a motor driving circuit, which generates gate driving signals by which the each of the MOSFETs can be individually driven, is added, and moreover, monitor circuits are individually added between two MOSFETs, which are connected in series, and between the motor driving circuit and the MOSFETs, and the abnormality of each of the MOSFETs is checked by the monitor circuits (for example, refer to Japanese Laid-Open Patent Publication No. 2012-188101).

Further background art is disclosed in the following documents.

US 2011/0205672 A1 shows an electric power steering device comprising a motor for generating an assist torque corresponding to a steering torque of a driver of a vehicle; and a control unit for controlling the motor, in a state where the assist torque, which is generated by the motor, is added to the steering torque so as to assist a steering operation of the driver, wherein the control unit includes a driving circuit which drives the motor, a computing device configured to compute a control signal for controlling the driving circuit and output the control signal to the driving circuit, and to generate a (second) command signal, and a power source relay which is connected between the driving circuit and a battery mounted in the vehicle, a capacitor connected between the power source relay and the driving circuit, a charging circuit configured to charge the capacitor, the power source relay including a first switching element, to which a first diode is connected in parallel, which is connected to the battery, and a second switching element, to which a second diode is connected in parallel, which is connected to the first switching element in series and is connected to the driving circuit; the charging circuit being configured in such a way that the charging circuit is controlled by the second command signal (signal to FET26) so as to charge the capacitor, the first diode and the second diode are connected in series and in a reverse polarity to each other; the electric power steering device further comprises a first monitor circuit configured to monitor a voltage between the driving circuit and the second switching element.

US 2012/0212159 A1 discloses an electrical power steering apparatus which includes a first MOS-FET and a second MOS-FET accommodating a first parasitic diode and a second parasitic diode in the conducting path between a battery and a motor driving circuit and being connected in series at the opposite direction respectively, and a condenser in an output side of the latter second MOS-FET. The ECU of the controller of the electrical power steering apparatus controls to turn on or off the first MOS-FET and the second MOS-FET in accordance with the predetermined sequence after the ignition switch is turned on, detecting the fault of the first MOS-FET, the second MOS-FET and the first parasitic diode and the second parasitic diode on the basis of the output voltage from each of the first MOS-FET and the second MOS-FET.

### SUMMARY OF THE INVENTION

As described above, in a case of a conventional electric power steering device in which a power source relay is composed of a MOSFET, a parasitic diode is included between a drain and a source of the MOSFET, so that even when an open failure is caused in the MOSFET, the open failure of the MOSFET cannot be detected due to the parasitic diode. Moreover, in a conventional electric power steering device which includes a power source relay in which MOSFETs are connected in series, there have been problems in that a number of circuit elements is increased, and a means for checking abnormalities of the circuit elements is complicated.

The present invention has been made to solve the above-described problems in a conventional electric power steering device, and an object of the invention is to provide an electric power steering device in which an abnormality of a switching element, such as a MOSFET, can be easily detected without complicating the electric power steering device.

The present invention provides an electric power steering device according to Claim 1.

### BRIEF DESCRIPTION OF THE DRAWINGS

Fig. 1 is a schematic diagram illustrating a main unit of an electric power steering device according to Embodiment 1 of the present invention;
Fig. 2 is a circuit schematic diagram illustrating a charging circuit in the electric power steering device according to Embodiment 1 of the present invention; and
Fig. 3 is a circuit schematic diagram illustrating a monitor circuit and a power source relay driving circuit in the electric power steering device according to Embodiment 1 of the present invention.

### DESCRIPTION OF EMBODIMENTS

There is described in the following electric power steering device which includes a motor for generating an assist torque corresponding to a steering torque of a driver which drives a vehicle; and a control unit for controlling the motor, in a state where the assist torque, which is generated by the motor, is added to the steering torque so as to assist a steering operation of the driver; wherein the control unit includes a driving circuit which drives the motor, a computing device which computes a control signal for controlling the driving circuit so as to output the control signal to the driving circuit, and generates a first command signal, and a power source relay which is connected between the driving circuit and a battery mounted in the vehicle so as to be opened or closed in accordance with the first command signal which is generated from the computing device; and the power source relay includes a first switching element, to which a first diode is connected in parallel, which is connected to the battery, and a second switching element, to which a second diode is connected in parallel, which is connected to the first switching element in series and is connected to the driving circuit; and the first switching element and the second switching element are driven in such a way that the first switching element and the second switching element are concurrently opened or closed by the first command signal which is generated from the computing device; and the first diode and the second diode are connected in series and in a reverse polarity each other when the first switching element and the second switching element are connected in series; and a first monitor circuit, which monitors a voltage between the driving circuit and the second switching element, is included; and the computing device judges an abnormality of the power source relay in accordance with the first command signal and the voltage which is monitored by the first monitor circuit.

According to the above electric power steering device, a driving circuit of a power source relay can be simplified, and a number of monitor circuits for judging an abnormality of the driving circuit can be reduced, and moreover, a number of abnormality judging processes can be reduced.

### Embodiment 1

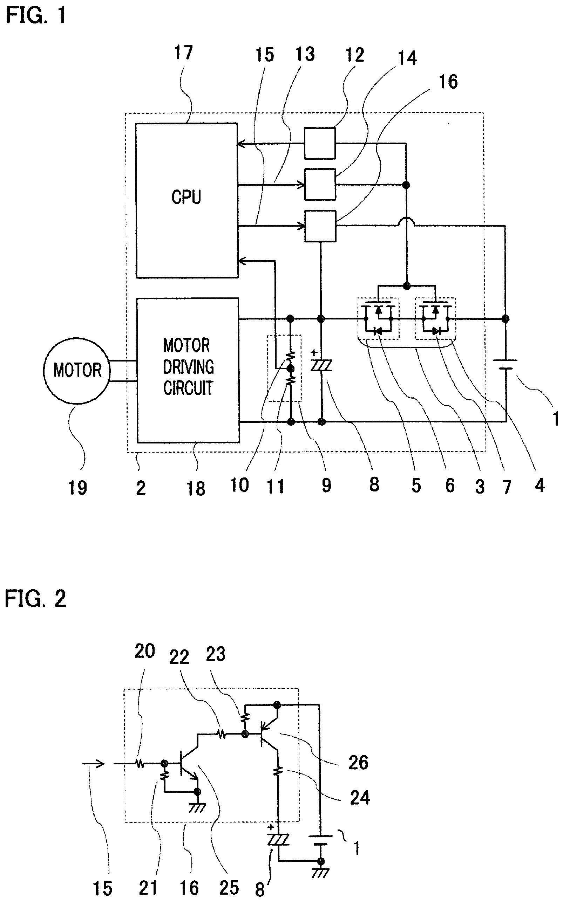

Hereinafter, an electric power steering device according to Embodiment 1 of the present invention will be explained in reference to drawings. Fig. 1 is a schematic diagram illustrating a main unit of the electric power steering device according to Embodiment 1 of the present invention.

In Fig. 1, an output shaft of a motor 19 is linked to a steering device of a vehicle via a reduction mechanism (not illustrated). As described below, a torque corresponding to a steering torque of a driver is generated by the motor 19, and the generated torque used as an assist torque is supplied to the steering device of the vehicle via the reduction mechanism.

A control unit 2 includes a motor driving circuit 18, a computing device (hereinafter, referred to as CPU) 17, a power source relay 3, a power source relay driving circuit 14, an electrolytic capacitor 8 used as a capacitor, a charging circuit 16, a first monitor circuit 9, and a second monitor circuit 12. A battery 1, which is mounted in the vehicle, is linked to the motor 19 via the power source relay 3 and the motor driving circuit 18 so as to supply an electric power to the motor 19.

The CPU 17 inputs a torque signal which is outputted from a torque detector (not illustrated) for detecting a steering torque which is supplied to a steering shaft by a driver, and a vehicle speed signal and the like, which are outputted from a vehicle speed detector (not illustrated) for detecting a vehicle speed. The CPU 17 computes a control signal based on the inputted signals, and outputs the computed control signal to the motor driving circuit 18. The motor driving circuit 18 generates a driving current corresponding to the control signal which is outputted from the CPU 17 so as to drive the motor 19, whereby the motor 19 generates a torque corresponding to the steering torque which is supplied by the driver.

The power source relay 3 is composed of a first MOSFET 4 used as a first switching element and a second MOSFET 5 used as a second switching element, which are connected in series. The first MOSFET 4 includes a first parasitic diode 7 which is connected in parallel with the first MOSFET 4. The second MOSFET 5 includes a second parasitic diode 6 which is connected in parallel with the first MOSFET 5. As described above, the power source relay 3, which is configured in such a way that the first MOSFET 4 and the second MOSFET 5 are connected in series, is inserted between a positive terminal of the electrolytic capacitor 8 and a positive side input terminal of the motor driving circuit 18. Moreover, gate electrodes of the first MOSFET 4 and the second MOSFET 5 are connected to the power source relay driving circuit 14.

When a driving signal, which is outputted from the power source relay driving circuit 14 in accordance with a first command signal 13 which is outputted from the CPU 17, is supplied to the gate electrodes, the first MOSFET 4 and the second MOSFET 5 are turned on, and the battery 1, which is mounted in the vehicle so as to be used as a power source, is connected to the motor driving circuit 18. Moreover, when the driving signal, which is outputted from the power source relay driving circuit 14, is not supplied to the gate electrodes, the first MOSFET 4 and the second MOSFET 5 are turned off, and the battery 1 is disconnected from the motor driving circuit 18.

In this case, when the battery 1 is normally connected in a polarity indicated in Fig. 1 and the first MOSFET 4 is turned off, the first parasitic diode 7 of the first MOSFET 4 is connected in a polarity of a direction where the battery 1 is interrupted from the motor driving circuit 18. On the other hand, when the battery 1 is abnormally connected in a reverse polarity with respect to the polarity indicated in Fig. 1 and the second MOSFET 5 is turned off, the second parasitic diode 6 of the second MOSFET 5 is connected in a polarity of a direction where the battery 1 is interrupted from the motor driving circuit 18, and it is prevented that the motor driving circuit 18 is abnormally connected to the battery 1 in a reverse polarity, whereby the motor driving circuit 18 is protected.

The first monitor circuit 9 is composed of a serial connection component of a resistor 10 and a resistor 11, which are connected between a positive polarity side input terminal and a negative polarity side input terminal of the motor driving circuit 18, and a voltage at a serial connection point of the resistor 10 and the resistor 11 is inputted to the CPU 17. The CPU 17 can monitor a voltage between the power source relay 3 and the motor driving circuit 18 in accordance with the voltage which is inputted from the first monitor circuit 9.

The electrolytic capacitor 8 is connected between the positive polarity side input terminal and the negative polarity side input terminal of the motor driving circuit 18, and is charged by the charging circuit 16 which is operated in accordance with a second command signal 15 which is outputted from the CPU 17, and is discharged when an insufficient current is passed from the battery 1 to the motor driving circuit 18, and absorbs a current ripple of the motor driving circuit 18.

Hereinafter, the charging circuit 16 will be explained. Fig. 2 is a circuit schematic diagram illustrating a charging circuit in the electric power steering device according to Embodiment 1 of the present invention. In Fig. 2, the charging circuit 16 is composed of a first transistor 25, a second transistor 26, and resistors 20, 21, 22, 23, and 24. An emitter of the second transistor 26 is connected to a positive polarity side terminal of the battery 1 which is mounted in the vehicle, and a collector of the second transistor 26 is connected to a positive polarity side terminal of the electrolytic capacitor 8 via the resistor 24. A collector of the first transistor 25 is connected to a base of the second transistor 26 via the resistor 22, and an emitter of the first transistor 25 is connected to a grounding potential portion of the vehicle.

In the charging circuit 16 which is configured as described above, when the second command signal 15, which is outputted from the CPU 17, is applied to a base of the first transistor 25 via the resistor 20, the first transistor 25 is turned on, whereby the second transistor 26 is turned on. As a result, the electrolytic capacitor 8 is charged from the battery 1 via the second transistor 26 and the resistor 24. When the second command signal 15, which is outputted from the CPU 17, is turned off, the first transistor 25 and the second transistor 26 are turned off, and it is stopped that the electrolytic capacitor 8 is charged.

As described above, the charging circuit 16 is turned on or turned off so as to be controlled in accordance with the second command signal 15 which is outputted from the CPU 17, and when the power source relay 3 is turned on, the charging circuit 16 is operated in such a way that the electrolytic capacitor 8 is previously charged in order to protect the power source relay 3 from a current which is passed through the electrolytic capacitor 8.

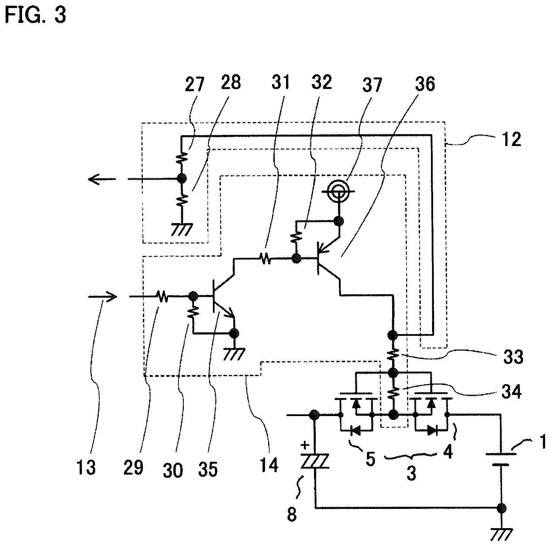

Hereinafter, the second monitor circuit 12 and the power source relay driving circuit 14 will be explained. Fig. 3 is a circuit schematic diagram illustrating a monitor circuit and a power source relay driving circuit in the electric power steering device according to Embodiment 1 of the present invention. In Fig. 3, the power source relay driving circuit 14 is composed of a third transistor 35, a fourth transistor 36, and resistors 29, 30, 31, 32, 33 and 34. An emitter of the fourth transistor 36 is connected to a power source 37 of the vehicle, and a collector of the fourth transistor 36 is connected, via the resistor 33, to gate electrodes of the first MOSFET 4 and the second MOSFET 5, which are included in the power source relay 3. An emitter of the third transistor 35 is connected to a grounding potential portion of the vehicle, and a collector of the third transistor 35 is connected to a base of the fourth transistor 36 via the resistor 31.

When a first command signal 13, which is outputted from the CPU 17, is supplied to a base of the third transistor 35 of the power source relay driving circuit 14 via the resistor 29, the third transistor 35 is turned on, whereby the fourth transistor 36 is turned on. When the fourth transistor 36 is turned on, a voltage of the power source 37 is applied to the gate electrodes of the first MOSFET 4 and the second MOSFET 5, whereby the first MOSFET 4 and the second MOSFET 5 are turned on. The voltage of the power source 37 is higher than the voltage of the battery 1, and even when the source voltage of the first MOSFET 4 and the second MOSFET 5 is equal to the voltage of the battery 1, the first MOSFET 4 and the second MOSFET 5 can be sufficiently turned on. As described above, the power source relay 3 can be turned on or turned off by the power source relay driving circuit 14 in accordance with the first command signal 13 which is outputted from the CPU 17.

The second monitor circuit 12 is composed of a serial connection component of the resistor 27 and the resistor 28, which are connected between a collector of the fourth transistor 36 in the power source relay driving circuit 14 and a grounding potential portion of the vehicle, and a voltage at a serial connection point of the resistor 27 and the resistor 28 is inputted to the CPU 17. The second monitor circuit 12 can monitor a voltage between the first MOSFET 4 and the second MOSFET 5, and is branched from the first command signal 13 of the CPU 17.

When the power source relay 3 is turned off in accordance with the first command signal 13, the CPU 17 detects, by using the first monitor circuit 9, whether a short failure is caused or not caused in the first MOSFET 4. In this case, when the power source relay 3 is turned off and the short failure is caused in the first MOSFET 4, the voltage of the battery 1 is applied to the first monitor circuit 9 via the first MOSFET 4, in which the short failure is caused, and the second parasitic diode 6 of the second MOSFET 5, so that a monitor voltage, which is inputted from the first monitor circuit 9 to the CPU 17, is higher than a predefined threshold value voltage. Therefore, when the monitor voltage, which is inputted from the first monitor circuit 9, is higher than the predefined threshold value voltage, the CPU 17 can judge that the short failure is caused in the first MOSFET 4.

On the other hand, when it is judged in the above-described judgment that the monitor voltage, which is inputted from the first monitor circuit 9, is lower than the predefined threshold value voltage and the short failure is not caused in the first MOSFET 4, and after it is recognized by the first monitor circuit 9 that the electrolytic capacitor 8 is charged when the charging circuit 16 is turned on in accordance with the second command signal 15 which is outputted from the CPU 17, the CPU 17 detects a short failure in the second MOSFET 5 by the second monitor circuit 12. In this case, when the power source relay 3 is turned off and the short failure is caused in the second MOSFET 5, a voltage of the electrolytic capacitor 8 is applied to the second monitor circuit 12 via the second MOSFET 5 in which the short failure is caused, so that a monitor voltage, which is inputted from the second monitor circuit 12 to the CPU 17, is higher than a predefined threshold value voltage. Therefore, when the monitor voltage, which is inputted from the second monitor circuit 12, is higher than the predefined threshold value voltage, the CPU 17 can judge that the short failure is caused in the second MOSFET 5.

Next, when it is judged in the above-described judgment that the monitor voltage, which is inputted from the second monitor circuit 12, is lower than the predefined threshold value voltage and the short failure is not caused in the second MOSFET 5, the power source relay 3 is turned on in accordance with the first command signal 13 which is outputted from the CPU 17, and an open failure of the first MOSFET 4 is detected by the first monitor circuit 9. In this case, when the power source relay 3 is turned on and the open failure is caused in the first MOSFET 4, a voltage of the battery 1 is not applied to the first monitor circuit 9, so that the monitor voltage, which is inputted from the first monitor circuit 9, is lower than the predefined threshold value voltage. Therefore, when the monitor voltage, which is inputted from the first monitor circuit 9, is lower than the predefined threshold value voltage, the CPU 17 can judge that the open failure is caused in the first MOSFET 4.

The failures, which are caused in the first MOSFET 4 and the second MOSFET 5, are judged in accordance with the above-described procedure, whereby functions, which are included in the first MOSFET 4 and the second MOSFET 5, can be inspected.

As described above, in the electric power steering device according to Embodiment 1 of the present invention, a charging voltage of the charging circuit 16, which is provided in order to protect the first MOSFET 4 and the second MOSFET 5, is used, and a part of the power source relay driving circuit 14 is used as a second monitor circuit, whereby MOSFET driving signals, which are required for each of the first MOSFET 4 and the second MOSFET 5 in a conventional device, can be integrated into one signal, and the control device can be downsized, and abnormality judging processes of the power source relay 3 can be reduced.

### INDUSTRIAL APPLICABILITY

The present invention can be applied in a field of a vehicle such as a car, and can be particularly applied in a field of an electric power steering device.

### [Description of the Symbols]

"1" is a battery; "2," a control unit; "3," a power source relay; "4," a first MOSFET; "5," a second MOSFET; "6," a first parasitic diode; "7", a second parasitic diode; "8," an electrolytic capacitor; "9," a first monitor circuit; "10, 11, 20 through 24, 27, 28, and 29 through 34," resistors; "12," a second monitor circuit; "13," a
first command signal; "14," a power source relay driving circuit; "15", a second command signal; "16," a charging circuit; "17," a computing device; "18," a motor driving circuit; "19," a motor; "25," a first transistor; "26," a second transistor; "35", a third transistor; "36," a fourth transistor; "37," a power source terminal.

## Claims

1. An electric power steering device comprising:
a motor (19) for generating an assist torque corresponding to a steering torque of a driver of a vehicle; and
a control unit (2) for controlling the motor (19), in a state where the assist torque, which is generated by the motor (19), is added to the steering torque so as to assist a steering operation of the driver, wherein:
the control unit (2) includes
a driving circuit (18) which drives the motor (19),
a computing device (17) configured to compute a control signal for controlling the driving circuit (18) and output the control signal to the driving circuit (18), and to generate a first command signal (13) and a second command signal (15), and
a power source relay (3) which is connected between the driving circuit (18) and a battery (1) mounted in the vehicle,
a power source relay driving circuit (14) connected to the computing device (17), the power source relay driving circuit (14) being configured to open or close the power source relay (3) in accordance with the first command signal (13) which is generated by the computing device (17),
a capacitor (8) connected between the power source relay (3) and the driving circuit (18),
a charging circuit (16) configured to charge the capacitor (8), the charging circuit (16) being configured in such a way that the charging circuit (16) is controlled by the second command signal (15) so as to charge the capacitor (8), and
a second monitor circuit (12) connected to the power source relay driving circuit (14) and to the computing device (17), the second monitor circuit (12) being configured to monitor a voltage between the first switching element (4) and the second switching element (5);
the power source relay (3) includes
a first switching element (4), to which a first diode (6) is connected in parallel, which is connected to the battery (1), and
a second switching element (5), to which a second diode (7) is connected in parallel, which is connected to the first switching element (4) in series and is connected to the driving circuit (18);
the power source relay driving circuit (14) is configured to drive the first switching element (4) and the second switching element (5) in such a way that the first switching element (4) and the second switching element (5) are concurrently opened or closed in accordance with the first command signal (13) which is generated by the computing device (17);
the first diode (6) and the second diode (7) are connected in series and in a reverse polarity to each other;
the electric power steering device further comprises a first monitor circuit (9) configured to monitor a voltage between the driving circuit (18) and the second switching element (5);
the computing device (17) is configured to:
judge that a short failure has been caused in the first switching element (4) when the first command signal (13) is set such that the first switching element (4) and the second switching element (5) are both opened, and the voltage monitored by the first monitor circuit (9) exceeds a predefined threshold voltage value; and
judge that a short failure has been caused in the second switching element (5) when the first monitor circuit (9) determines that the capacitor (8) is charged when the charging circuit (16) is turned on in accordance with the second command signal (15), the power source relay (3) is turned off, and the voltage monitored by the second monitor circuit (12) exceeds a second predefined threshold voltage value.

2. An electric power steering device as recited in claim 1, wherein the computing device (17) is configured to judge the abnormality of the power source relay (3) in such a way that the computing device (17) controls the charging circuit (16) and the power source relay (3) in accordance with a predetermined procedure.

## Patentansprüche

1. Eine elektrische Servolenkung umfassend:
einen Motor (19) zur Erzeugung eines einem Lenkdrehmoment eines Fahrzeugführers entsprechenden Hilfsdrehmoments; und
eine Steuereinheit (2) zum Steuern des Motors (19) in einem Zustand, in dem das Hilfsdrehmoment, welches vom Motor (19) generiert wird, zum Lenkdrehmoment addiert wird, um einen Lenkbetrieb des Fahrers zu unterstützen, wobei:
die Steuereinheit (2) beinhaltet
eine Treiberschaltung (18), welche den Motor (19) treibt,
eine Rechenvorrichtung (17), die konfiguriert ist zum Berechnen eines Steuersignals zum Steuern der Treiberschaltung (18) und Ausgeben des Steuersignals an die Treiberschaltung (18), und zum Generieren eines ersten Befehlssignals (13) und eines zweiten Befehlssignals (15), und
ein Energieversorgungsrelais (3), welches zwischen die Treiberschaltung (18) und eine im Fahrzeug montierte Batterie (1) geschaltet ist,
eine Energieversorgungsrelais-Treiberschaltung (14), die mit der Rechenvorrichtung (17) verbunden ist, wobei die Energieversorgungsrelais-Treiberschaltung (14) konfiguriert ist zum Öffnen oder Schließen des Energieversorgungsrelais (3) gemäß dem ersten Befehlssignal (13), welches von der Rechenvorrichtung (17) generiert wird, einen Kondensator (8), der zwischen das Energieversorgungsrelais (3) und die Ansteuerschaltung (18) geschaltet ist,
eine Ladeschaltung (16), die konfiguriert ist zum Laden des Kondensators (8), wobei die Ladeschaltung (16) so konfiguriert ist, dass die Ladeschaltung (16) durch das zweite Befehlssignal (15) gesteuert wird, um den Kondensator (8) zu laden, und
eine zweite Überwachungsschaltung (12), die mit der Energieversorgungsrelais-Treiberschaltung (14) und der Rechenvorrichtung (17) verbunden ist, wobei die zweite Überwachungsschaltung (12) konfiguriert ist zum Überwachen einer Spannung zwischen dem ersten Schaltelement (4) und dem zweiten Schaltelement (5) ;
das Energieversorgungsrelais (3) beinhaltet
ein erstes Schaltelement (4), zu dem eine erste Diode (6) parallel geschaltet ist, welches an die Batterie (1) angeschlossen ist, und
ein zweites Schaltelement (5), zu welchem eine zweite Diode (7) parallel geschaltet ist, welches mit dem ersten Schaltelement (4) in Reihe geschaltet ist und mit der Treiberschaltung (18) verbunden ist;
die Energieversorgungsrelais-Treiberschaltung (14) konfiguriert ist zum Treiben des ersten Schaltelements (4) und des zweiten Schaltelements (5) so, dass das erste Schaltelement (4) und das zweite Schaltelement (5) gleichzeitig geöffnet oder geschlossen werden gemäß dem ersten Befehlssignal (13), welches von der Rechenvorrichtung (17) generiert wird;
die erste Diode (6) und die zweite Diode (7) in Reihe und in umgekehrter Polarität zueinander geschaltet sind;
die elektrische Servolenkung zusätzlich eine erste Überwachungsschaltung (9) umfasst, die konfiguriert ist zum Überwachen einer Spannung zwischen der Treiberschaltung (18) und dem zweiten Schaltelement (5);
die Rechenvorrichtung (17) konfiguriert ist zum:
Beurteilen, dass eine kurze Störung in dem ersten Schaltelement (4) aufgetreten ist, wenn das erste Befehlssignal (13) gesetzt ist, sodass das erste Schaltelement (4) und das zweite Schaltelement (5) beide geöffnet sind, und die durch die erste Überwachungsschaltung (9) überwachte Spannung einen vordefinierten Schwellenspannungswert überschreitet; und
Beurteilen, dass eine kurze Störung in dem zweiten Schaltelement (5) aufgetreten ist, wenn die erste Überwachungsschaltung (9) bestimmt, dass der Kondensator (8) geladen wird, wenn die Ladeschaltung (16) eingeschaltet ist gemäß dem zweiten Befehlssignal (15), das Energieversorgungsrelais (3) ausgeschaltet ist, und die durch die zweite Überwachungsschaltung (12) überwachte Spannung einen zweiten vordefinierten Schwellenspannungswert überschreitet.

2. Eine elektrische Servolenkung nach Anspruch 1, wobei die Rechenvorrichtung (17) konfiguriert ist zum Beurteilen der Unregelmäßigkeit des Energieversorgungsrelais (3) so, dass die Rechenvorrichtung (17) die Ladeschaltung (16) und das Energieversorgungsrelais (3) gemäß einem vordefinierten Verfahren steuert.

## Revendications

1. Dispositif de direction électrique comprenant :
un moteur (19) pour générer un couple d'assistance correspondant à un couple de direction d'un conducteur d'un véhicule ; et
une unité de contrôle (2) pour contrôler le moteur (19), dans un état où le couple d'assistance, qui est généré par le moteur (19), est ajouté au couple de direction de manière à assister une opération de direction du conducteur, dans lequel :
l'unité de contrôle (2) inclut
un circuit d'entraînement (18) qui entraîne le moteur (19),
un dispositif de calcul (17) configuré pour calculer un signal de contrôle pour contrôler le circuit d'entraînement (18) et émettre le signal de contrôle vers le circuit d'entraînement (18), et pour générer un premier signal de commande (13) et un second signal de commande (15), et
un relais de source d'alimentation (3) qui est connecté entre le circuit d'entraînement (18) et une batterie (1) montée dans le véhicule,
un circuit d'entraînement de relais de source d'alimentation (14) connecté au dispositif de calcul (17), le circuit d'entraînement de relais de source d'alimentation (14) étant configuré pour ouvrir ou fermer le relais de source d'alimentation (3) en fonction du premier signal de commande (13) qui est généré par le dispositif de calcul (17),
un condensateur (8) connecté entre le relais de source d'alimentation (3) et le circuit d'entraînement (18),
un circuit de chargement (16) configuré pour charger le condensateur (8), le circuit de chargement (16) étant configuré de telle manière que le circuit de chargement (16) est contrôlé par le second signal de commande (15) de façon à charger le condensateur (8), et
un second circuit de surveillance (12) connecté au circuit d'entraînement de relais de source d'alimentation (14) et au dispositif de calcul (17), le second circuit de surveillance (12) étant configuré pour surveiller une tension entre le premier élément de commutation (4) et le second élément de commutation (5) ;
le relais de source d'alimentation (3) inclut
un premier élément de commutation (4), auquel une première diode (6) est connectée en parallèle, qui est connecté à la batterie (1), et
un second élément de commutation (5), auquel une seconde diode (7) est connectée en parallèle, qui est connecté au premier élément de commutation (4) en série et est connecté au circuit d'entraînement (18) ;
le circuit d'entraînement de relais de source d'alimentation (14) est configuré pour entraîner le premier élément de commutation (4) et le second élément de commutation (5) de telle manière que le premier élément de commutation (4) et le second élément de commutation (5) sont simultanément ouverts ou fermés en fonction du premier signal de commande (13) qui est généré par le dispositif de calcul (17) ;
la première diode (6) et la seconde diode (7) sont connectées en série et en polarité inversée l'une à l'autre ;
le dispositif de direction électrique comprend en outre un premier circuit de surveillance (9) configuré pour surveiller une tension entre le circuit d'entraînement (18) et le second élément de commutation (5) ;
le dispositif de calcul (17) est configuré pour :
juger qu'une courte panne a été provoquée dans le premier élément de commutation (4) quand le premier signal de commande (13) est paramétré de sorte que le premier élément de commutation (4) et le second élément de commutation (5) sont tous les deux ouverts, et la tension surveillée par le premier circuit de surveillance (9) dépasse une valeur de tension seuil prédéfinie ; et
juger qu'une courte panne a été provoquée dans le second élément de commutation (5) quand le premier circuit de surveillance (9) détermine que le condensateur (8) est chargé quand le circuit de chargement (16) est mis sous tension en fonction du second signal de commande (15), le relais de source d'alimentation (3) est coupé, et la tension surveillée par le second circuit de moniteur (12) dépasse une seconde valeur de tension seuil prédéfinie.

2. Dispositif de direction électrique selon la revendication 1, dans lequel le dispositif de calcul (17) est configuré pour juger l'anomalie du relais de source d'alimentation (3) de telle manière que le dispositif de calcul (17) contrôle le circuit de chargement (16) et le relais de source d'alimentation (3) en fonction d'une procédure prédéterminée.
